# FASCICULE DE BREVET EUROPEEN

(11) **EP 0 708 513 B1**
(45) Date de publication et mention de la délivrance du brevet: **03.03.1999**
(21) Numéro de dépôt: 95402291.9
(22) Date de dépôt: 13.10.1995
(51) Int. Cl.: H02B 11/173, H02B 13/02

(54) **Cellule avec disjoncteur auto-sectionneur**
Schaltgerätzelle
Switchgear cell

(30) Priorité: 17.10.1994 FR 9412354
(43) Date de publication de la demande: 24.04.1996
(73) Titulaire: GEC ALSTHOM T ET D SA, 75016 Paris (FR)
(72) Inventeur: Berry, Pierre, F-34980 St. Gely du Fesc (FR); Lekieffre, Eric, F-34400 Lunel (FR)
(74) Mandataire: Gosse, Michel

(56) Documents cités:
- EP-A- 0 543 683
- DE-A- 1 515 742
- FR-A- 1 231 725

## Description

La présente invention est relative à une cellule moyenne tension équipée d'un disjoncteur auto-sectionneur.

Un tel disjoncteur a été décrit notamment dans le document EP-A- 0 543 683.

Un disjoncteur auto-sectionneur multipolaire comprend, pour chaque pôle, une enveloppe isolante enfermant un organe de coupure tel qu'une ampoule à vide, l'enveloppe comportant à une première extrémité un premier contact relié à une première borne de l'organe de coupure et destiné à coopérer avec une barre d'un jeu de barres, et à une seconde extrémité un second contact relié à une seconde borne de l'organe de coupure et destiné à coopérer avec un câble d'un jeu de câbles, les enveloppes des différents pôles étant fixées à un même profilé métallique le long duquel est placé un arbre de manoeuvre commun aux pôles qui est actionné par une commande contenue dans un coffret solidaire du profilé, le profilé étant actionné en rotation pour assurer la fonction sectionnement de l'appareil.

Dans le document précité, il a été décrit une cellule moyenne tension comprenant un disjoncteur auto-sectionneur placé dans un tiroir coulissant dans un caisson comportant des isolateurs supports pour un jeu de barres et des isolateurs supports pour un départ de câbles, ledit disjoncteur pouvant, en position "hors service", et après une rotation de 90 degrés de l'ensemble des pôles, prendre place entièrement dans le tiroir qui peut alors éventuellement être extrait du caisson.

Un but de la présente invention est de définir un mode de réalisation industriel du tiroir de cellule, de construction simple et économique, et assurant une parfaite sûreté de fonctionnement et de sécurité pour le personnel de maintenance.

Un autre but de l'invention est de préciser les moyens manuels ou automatiques permettant la rotation de l'ensemble des pôles pour une opération d'embrochage ou de débrochage.

L'invention a pour objet une cellule moyenne tension comprenant un disjoncteur auto-sectionneur comprenant pour chaque pôle, une enveloppe isolante contenant des organes de coupure, les différentes enveloppes étant portées par une poutre-support commune solidaire d'un boîtier de commande pour la commande simultanée des organes de coupure des pôles, chaque pôle étant relié d'une part par des premiers connecteurs à un jeu de barres et d'autre part par des seconds connecteurs à un jeu de câbles, le disjoncteur pouvant être mis hors service par rotation de la poutre-support et, dans la position hors service, se trouver logé dans un tiroir pouvant être extrait de la cellule, caractérisée en ce que le tiroir est constitué d'un châssis formé d'un tube en acier inoxydable cintré.

La section du tube est carrée, rectangulaire ou circulaire.

Le châssis comprend deux portions horizontales parallèles munies de roulettes.

Lesdites portions horizontales sont prolongées à une première extrémité par deux premières portions verticales réunies par une première portion horizontale portant un premier élément d'arbre pour la poutre-support.

Les portions horizontales sont prolongées à une seconde extrémité par des secondes portions verticales auxquelles sont fixées des fers en U.

Les fers en U sont reliés par une première plaque métallique, située du côté arrière de la cellule, et une seconde plaque, un second élément d'arbre pour la rotation de la poutre traversant lesdites plaques.

L'une des secondes portions verticales est prolongée par des portions formant de manière à former un quadrilatère presque fermé dans un plan vertical parallèle aux portions horizontales.

Un dispositif pour la mise en rotation de la poutre-support est fixé d'une part audites portions formant un quadrilatère presque fermé et d'autre part à une seconde plaque métallique fixée auxdits fer en U.

Le dispositif pour la mise en rotation de la poutre-support comprend un premier arbre dont l'extrémité peut recevoir une manivelle et dont l'autre extrémité actionne en rotation un second arbre fileté muni d'un écrou possédant des tenons et assujetti à rester fixe en rotation de sorte que la rotation du second arbre entraîne le déplacement en translation des tenons, lesdits tenons s'engageant dans une fourchette solidarisée à la poutre-support et au boîtier de commande et articulée au second élément d'arbre, le mouvement de translation des tenons provoquant la rotation de la fourchette.

La cellule comprend un moteur électrique pour l'entraînement du premier arbre.

L'invention est maintenant expliquée en détail par la description d'un mode préféré de réalisation, en référence au dessin annexé dans lequel:
- la figure 1 est une vue en élévation d'un tiroir de cellule avec disjoncteur auto-sectionneur, ce dernier étant représenté en position "service",
- la figure 2 est une vue de dessus du même tiroir,
- la figure 3 est une vue en élévation du châssis pour le tiroir de la cellule de l'invention,
- la figure 4 est une vue de dessus du même châssis,
- la figure 5 est une vue en bout du même chassis,
- la figure 6 est une vue en élévation de la plaque portant les éléments pour le débrochage du disjoncteur,
- la figure 7 est une vue en bout du mécanisme de débrochage du disjoncteur,
- la figure 8 est une vue en coupe selon la ligne VIII-VIII de la figure 7,
- la figure 9 est une vue en élévation de la poutre-support des pôles,
- la figure 10 est une vue en coupe selon la ligne X-X de la figure 9,
- la figure 11 est une vue de côté d'une fourchette pour permettre le débrochage et l'embrochage des pôles du disjoncteur.

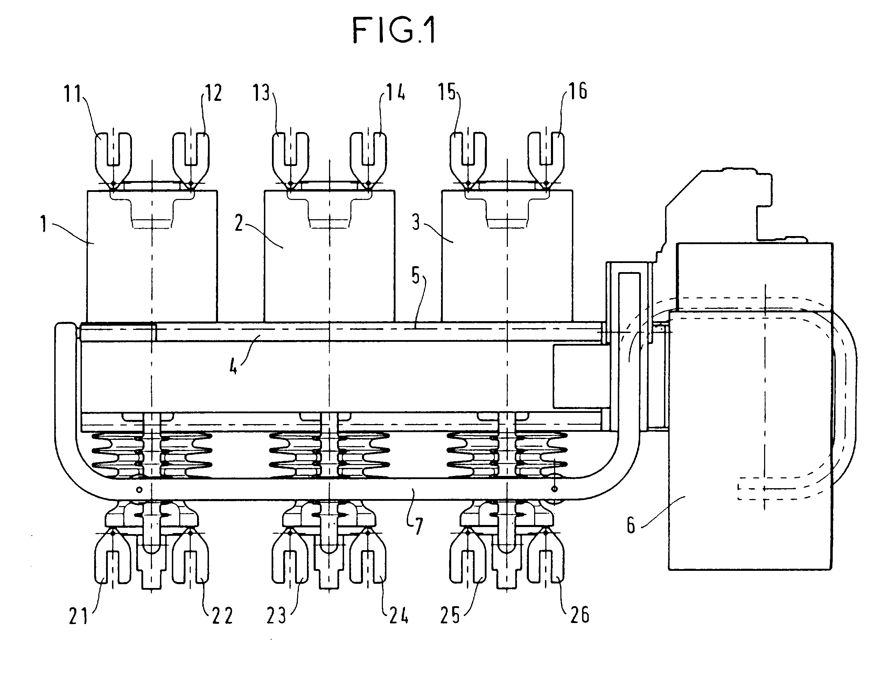

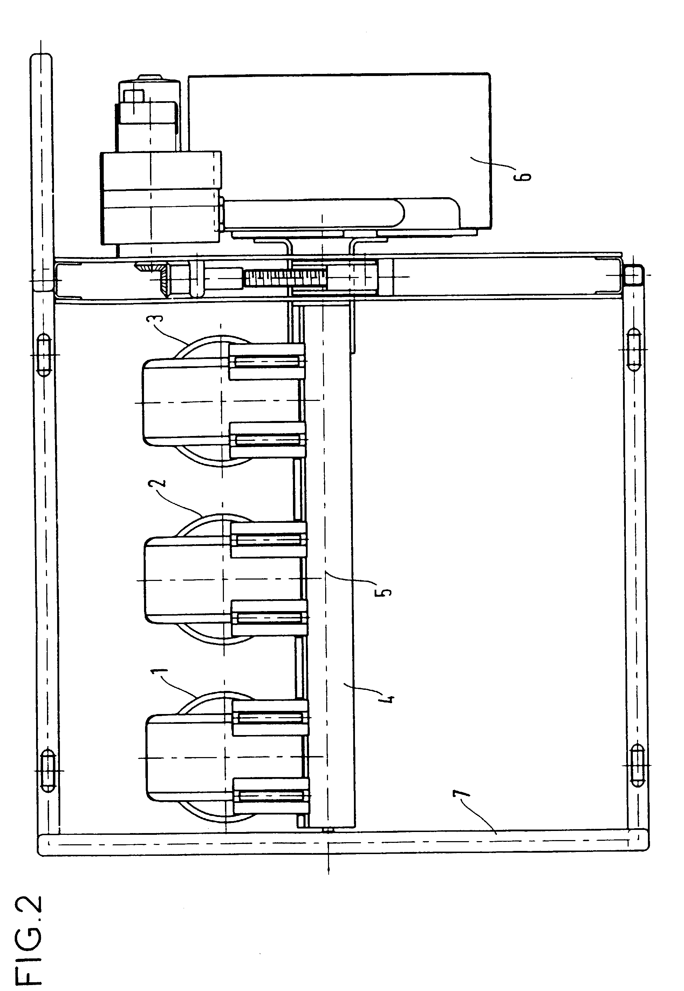

La figure 1 représente, en élévation, un tiroir d'une cellule moyenne tension avec disjoncteur auto-sectionneur. La cellule est représentée de côté, sa face avant étant à droite de la figure et la face arrière à gauche de la figure.La figure 2 est la vue de dessus correspondante.

Dans les figures, on distingue les trois pôles du disjoncteur, référencés 1 à 3 et fixés à une poutre commune 4 pouvant pivoter autour d'un axe horizontal 5. Un boîtier de commande 6, contenant l'organe de manoeuvre du disjoncteur, est solidaire en rotation de la poutre 4. Le disjoncteur est représenté en service, les contacts supérieurs 11-12, 13-14 et 15-16 des pôles respectifs sont engagés dans des barres non représentées d'un jeu de barres. Les contacts inférieurs 21-22, 23-24, 25-26 sont engagés dans des connecteurs non représentés d'un jeu de câbles.

Selon une caractéristique essentielle de l'invention, le tiroir dans lequel sont placés les pôles 1 à 3 et la poutre support commune 4, est constitué d'un châssis constitué d'un tube cintré 7, de préférence en acier inoxydable; avantageusement le châssis est constitué d'un seul tube. Cette disposition permet d'avoir un tiroir léger et robuste, de fabrication économique puisqu'elle ne nécessite ni découpe ni soudage de tôles; le châssis peut être réalisé avec une très grande précision de fabrication. De préférence, la section du tube est carrée, ce qui permet de faciliter la fixation des divers organes nécessaires, mais elle peut en variante être rectangulaire ou circulaire.

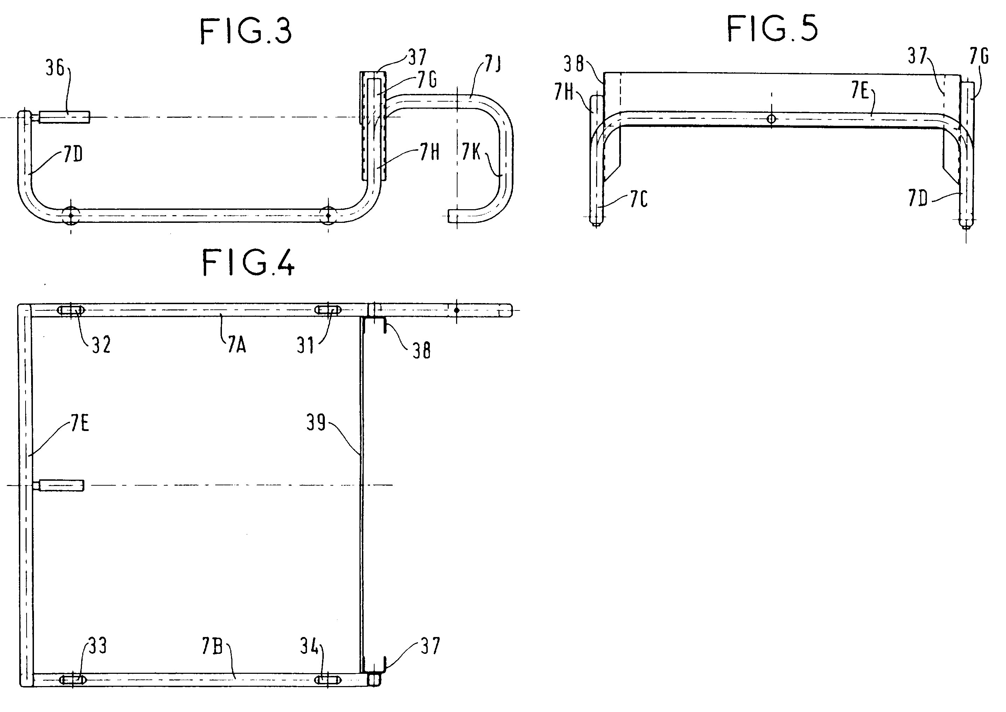

Les figures 3 à 5 permettent d'expliquer la forme du châssis tubulaire. Les figures 3 et 4 montrent, à échelle réduite par rapport aux figues 1 et 2, le châssis dans les positions respectives des figures 1 et 2; la figure 5 montre, à la même échelle que les figures 3 et 4, le châssis vu en bout.

Le châssis présente deux portions parallèles horizontales 7A et 7B de même longueur, constituant le fond du châssis, et dans lesquelles sont placées des roulettes 31 à 34. Ces roulettes permettent à l'ensemble tripolaire de rouler en translation horizontale à l'intérieur de la cellule sur des rails ou glissières non représentés.

A l'extrémité arrière de la cellule (à gauche dans les figures 3 et 4), le tube présente deux portions verticales 7C et 7D de hauteurs égales et reliées par une portion horizontale 7E. Au milieu de la portion 7E est fixé un premier élément d'arbre horizontal 36 auquel sera articulée la poutre 5 support des pôles.

Du côté avant de la cellule, la portion 7B du châssis se replie en une portion verticale 7G à laquelle est fixé, de préférence par rivetage, un fer en U 37 (ou tout élément de cornière approprié). L'autre portion 7A se prolonge, côté avant de la cellule, par une portion verticale 7H elle-meme continuée, dans le même plan vertical, par une portion horizontale 7J suivie d'une portion verticale 7K en direction du fond du tiroir et terminée enfin par une courte portion 7L horizontale en direction de la face arrière du tiroir. Ainsi, les portions 7H, 7J, 7K et 7 L dessinent un rectangle presque fermé dans un plan vertical parallèle aux portions 7A et 7B.

A la portion 7H est fixé un fer en U 38 (ou élément analogue remplissant la même fonction) ; les fers 37 et 38 permettent la fixation d'une première plaque 39, dite plaque arrière car elle est située, par rapport à la seconde plaque décrite plus loin vers l'arrière du tiroir. Cette plaque sert essentiellement à la rigidification du chassis et au maintien du second élément d'arbre pour la poutre, décrit plus loin.

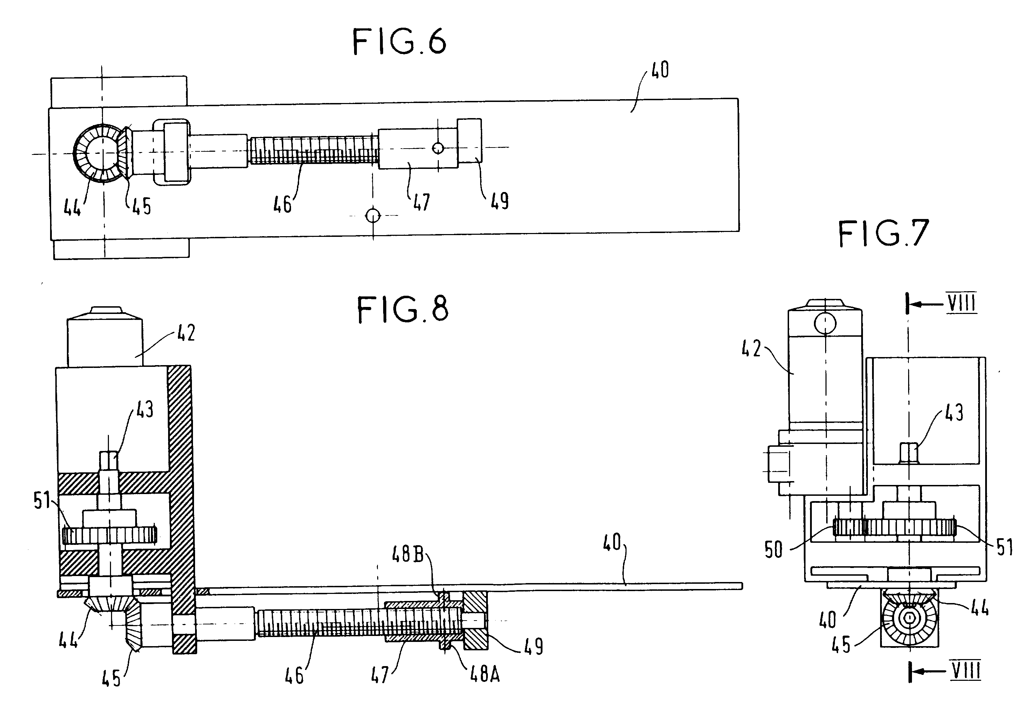

Aux fers en U 37 et 38 est fixée une seconde plaque 40, visible dans les figures 6 à 8, sur laquelle est articulé le boîtier de commande 6 du disjoncteur et à laquelle sont fixés les organes pour le débrochage du disjoncteur. Ce sont ces derniers qui sont décrits maintenant.

Le débrochage peut être effectué manuellement ou à l'aide d'un moteur électrique.

Le moteur est référencé 42 dans les figures 7 et 8, mais on va décrire tout d'abord les éléments pour le débrochage manuel. Ces derniers comprennent un arbre 43 muni d'une extrémité permettant une solidarisation avec une manivelle de manoeuvre. A l'autre extrémité, l'arbre 43 porte un pignon de renvoi d'angle 44 engrènant sur un pignon 45 disposé à une extrémité d'un arbre 46 disposé parallèlement à la plaque 40 dans un plan horizontal. L'autre extrémité de l'arbre est filetée et porte un écrou 47 muni de tenons 48A et 48B; l'écrou est assujetti à rester fixe en rotation de sorte qu'un mouvement de rotation de l'arbre 46 communique à l'écrou 47, donc aux tenons 48A et 48B, un mouvement de translation. Une butée 49, servant également de palier à l'arbre 46, limite la course de l'écrou 47. Avant de montrer comment le déplacement des tenons 48A et 48B permet de provoquer l'embrochage ou le débrochage du disjoncteur, il convient de mentionner que l'arbre 43 peut être entraîné par le moteur 42 dont l'arbre porte un pignon 50 coopérant avec une couronne dentée 51 calée sur l'arbre 43.

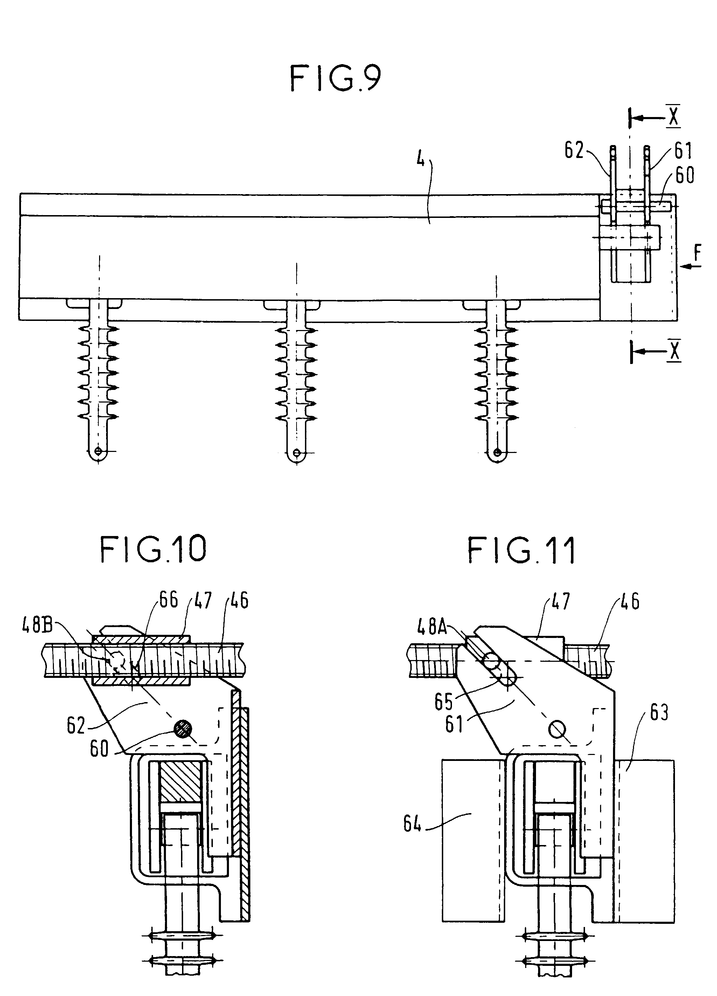

La figure 9 représente en élévation la poutre-support 4 montrant un deuxième élément d'arbre 60 pour la rotation de la poutre-support. Une fourchette comprenant deux plaques parallèles 61 et 62 est solidarisée par des équerres 63 et 64 au boîtier de manoeuvre 6 et à la poutre support 4 (voir figures 9 et 10). Les tenons 48A et 48B de l'écrou 47 s'engagent dans des échancrures 65 et 66 des plaques 61 et 62, de sorte que le mouvement de translation de l'écrou 47 produit un mouvement de rotation de l'ensemble du disjoncteur et du boîtier de manoeuvre 6.

L'invention est de mise en oeuvre aisée et économique et s'applique à toutes les gammes de cellules moyenne tension.

## Revendications

1. Cellule moyenne tension comprenant un disjoncteur auto-sectionneur comprenant pour chaque pôle (1, 2, 3), une enveloppe isolante contenant des organes de coupure, les différentes enveloppes étant portées par une poutre-support commune (5) solidaire d'un boîtier de commande (6) pour la commande simultanée des organes de coupure des pôles, chaque pôle étant relié d'une part par des premiers connecteurs (11, 12; 13, 14;15, 16) à un jeu de barres et d'autre part par des seconds connecteurs (21, 22;23, 24;25, 26) à un jeu de câbles, le disjoncteur pouvant être mis hors service par rotation de la poutre-support et, dans la position hors service, se trouver logé dans un tiroir pouvant être extrait de la cellule, caractérisée en ce que le tiroir est constitué d'un châssis (7) formé d'un tube en acier inoxydable cintré.

2. Cellule selon la revendication 1, caractérisée en ce que la section du tube (7) est carrée, rectangulaire ou circulaire.

3. Cellule selon l'une des revendications 1 et 2, caractérisée en ce que le châssis comprend deux portions horizontales parallèles (7A, 7B) munies de roulettes.

4. Cellule selon la revendication 3, caractérisée en ce que lesdites portions horizontales (7A, 7B) sont prolongées à une première extrémité par deux premières portions verticales (7C, 7D) réunies par une première portion horizontale (7E) portant un premier élément d'arbre (36) pour la poutre-support (5).

5. Cellule selon l'une des revendications 3 et 4, caractérisée en ce que les portions horizontales (7A, 7B) sont prolongées à une seconde extrémité par des secondes portions verticales (7G, 7H) auxquelles sont fixées des fers en U (37, 38).

6. Cellule selon la revendication 5, caractérisée en ce que les fers en U (37, 38)sont reliés par une première plaque métallique (39), située du côté arrière de la cellule, et une seconde plaque (40), un second élément d'arbre (60) pour la rotation de la poutre traversant lesdites plaques.

7. Cellule selon l'une des revendications 5 et 6, caractérisée en ce que l'une (7H) des secondes portions verticales est prolongée par des portions (7J, 7K, 7L) formant de manière à former un quadrilatère presque fermé dans un plan vertical parallèle aux portions horizontales (7A, 7B).

8. Cellule selon l'une des revendications 6 et 7, carctérisée en ce qu'un dispositif (42, 43, 44, 45, 46, 47, 48) pour la mise en rotation de la poutre-support (5) est fixé d'une part audites portions (7J, 7K, 7L) formant un quadrilatère presque fermé et d'autre part à une seconde plaque métallique (40) fixée auxdits fer en U (37, 38).

9. Cellule selon la revendication 8, caractérisée en ce que le dispositif pour la mise en rotation de la poutre-support (5) comprend un premier arbre (43) dont l'extrémité peut recevoir une manivelle et dont l'autre extrémité actionne en rotation un second arbre (46) fileté muni d'un écrou (47) possédant des tenons (48A, 48B) et assujetti à rester fixe en rotation de sorte que la rotation du second arbre entraîne le déplacement en translation des tenons, lesdits tenons s'engageant dans une fourchette (61, 62) solidarisée à la poutre-support (5) et au boîtier de commande (6) et articulée au second élément d'arbre (60), le mouvement de translation des tenons provoquant la rotation de la fourchette.

10. Cellule selon la revendication 9, caractérisée en ce qu'elle comprend un moteur électrique (42) pour l'entraînement du premier arbre (43).

## Patentansprüche

1. Mittelspannungszelle, die einen selbstunterbrechenden Lastschalter umfasst, der für jeden Pol (1, 2, 3) eine isolierende Umhüllung umfasst, die Trennorgane enthält, wobei die verschiedenen Umhüllungen von einem gemeinsamen Träger (5) getragen werden, der fest mit einem Steuergehäuse (6) zur gleichzeitigen Steuerung der Trennorgane der Pole verbunden ist, wobei jeder Pol zum einen über erste Verbinder (11, 12; 13, 14; 15, 16) mit einem Stabsystem und zum anderen über zweite Verbinder (21, 22; 23, 24; 25, 26) mit einem Kabelsystem verbunden ist, wobei der Lastschalter außer Betrieb durch Rotation des Trägers gebracht werden kann und sich in der Position außer Betrieb in einer Schublade befinden kann, die aus der Zelle gezogen werden kann, dadurch gekennzeichnet, dass der Schubkasten aus einem Gestell (7) besteht, das aus einer gebogenen Röhre aus rostfreiem Stahl geformt ist.

2. Zelle nach Anspruch 1, **dadurch gekennzeichnet,** dass der Querschnitt der Röhre (7) quadratisch, rechteckig oder kreisförmig ist.

3. Zelle nach einem der Ansprüche 1 und 2, dadurch gekennzeichnet, dass das Gestell zwei parallele horizontale Abschnitte (7A, 7B) umfasst, die mit Rollen versehen sind.

4. Zelle nach Anspruch 3, dadurch gekennzeichnet, dass die horizontalen Abschnitte (7A, 7B) an einem ersten Ende durch zwei vertikale Abschnitte (7C, 7D) verlängert sind, die durch einen ersten horizontalen Abschnitt (7E) verbunden sind, der ein erstes Wellenelement (36) für den Träger (5) trägt.

5. Zelle nach einem der Ansprüche 3 und 4, dadurch gekennzeichnet, dass die horizontalen Abschnitte (7A, 7B) an einem zweiten Ende durch zweite vertikale Abschnitte (7G, 7H) verlängert sind, an denen U-förmige Eisen (37, 38) befestigt sind.

6. Zelle nach Anspruch 5, dadurch gekennzeichnet, dass die U-förmigen Eisen (37, 38) durch eine erste Metallplatte(39), die an der Rückseite der Zelle angeordnet ist, und eine zweite Platte (40) verbunden sind, wobei ein zweites Wellenelement (60) für die Rotation des Trägers die Platten durchquert.

7. Zelle nach einem der Ansprüche 5 und 6, dadurch gekennzeichnet, dass einer (7H) der zweiten vertikalen Abschnitte durch Abschnitte (7J, 7K, 7L) verlängert ist, die so ausgebildet sind, dass sie ein fast geschlossenes Viereck in einer vertikalen Ebene parallel zu den horizontalen Abschnitten (7A, 7B) bilden.

8. Zelle nach einem der Ansprüche 6 und 7, dadurch gekennzeichnet, dass eine Vorrichtung (42, 43, 44, 45, 46, 47, 48) zum In-Rotation-Versetzen des Trägers (5) zum einen an einem der Abschnitte (7J, 7K, 7L), die ein fast geschlossenes Viereck bilden, und zum anderen an einer zweiten Metallplatte (40) befestigt ist, die an den U-förmigen Eisen (37, 38) befestigt ist.

9. Zelle nach Anspruch 8, dadurch gekennzeichnet, dass die Vorrichtung zum In-Rotation-Versetzen des Trägers (5) eine erste Welle (43) umfasst, deren eines Ende eine Kurbel aufnehmen kann und deren anderes Ende eine zweite, mit einem Gewinde versehene Welle (46) in eine Rotationsbewegung versetzt, die mit einer Mutter (47) versehen ist, die Zapfen (48A, 48B) besitzt, und die gut gesichert ist, um bei der Rotation fest zu bleiben, so dass die Rotation der zweiten Welle eine Translationsbewegung der Zapfen mit sich bringt, wobei die Zapfen in eine Gabel (61, 62) greifen, die an dem Träger (5) und an dem Steuergehäuse (6) fest angebracht ist und die an das zweite Wellenelement (60) angelenkt ist, wobei die Translationsbewegung der Zapfen eine Rotation der Gabel hervorruft.

10. Zelle nach Anspruch 9, dadurch gekennzeichnet, dass sie einen Elektromotor (42) zum Antreiben der ersten Welle (43) umfasst.

## Claims

1. Medium-voltage switchgear comprising a switch-disconnector comprising for each pole (1, 2, 3) an insulative enclosure containing switching units, the various enclosures being carried by a common support beam (5) fastened to a control unit (6) for simultaneous control of the switching units of the poles, each pole being connected by first connectors (11, 12; 13, 14; 15, 16) to a set of busbars and by second connectors (21, 22; 23, 24; 25, 26) to a set of cables, the switch-disconnector being adapted to be isolated by rotating the support beam and being housed, in the isolated position, in a module that can be withdrawn from the switchgear, characterised in that the module comprises a chassis (7) made from a curved stainless steel tube.

2. Switchgear according to claim 1 characterised in that the section of the tube (7) is square, rectangular or circular.

3. Switchgear according to claim 1 or claim 2 characterised in that the chassis comprises two parallel horizontal portions (7A, 7B) provided with rollers.

4. Switchgear according to claim 3 characterised in that said horizontal portions (7A, 7B) are extended at a first end by two first vertical portions (7C, 7D) connected by a first horizontal portion (7E) carrying a first shaft member (36) for the support beam (5).

5. Switchgear according to claim 3 or claim 4 characterised in that the horizontal portions (7A, 7B) are extended at a second end by second vertical portions (7G, 7H) to which are fixed U-section bars (37, 38).

6. Switchgear according to claim 5 characterised in that the U-section bars (37, 38) are connected by a first metal plate (39) at the rear of the switchgear and a second plate (40), a second shaft member (60) for rotating the beam passing through said plates.

7. Switchgear according to claim 5 or claim 6 characterised in that one second vertical portion (7H) is extended by portions (7J, 7K, 7L) forming a virtually closed quadrilateral in a vertical plane parallel to the horizontal portions (7A, 7B).

8. Switchgear according to claim 6 or claim 7 characterised in that a device (42, 43, 44, 45, 46, 47, 48) for rotating the support beam (5) is fixed to said portions (7J, 7K, 7L) forming a virtually closed quadrilateral and to a second metal plate (40) fixed to said U-section bars (37, 38).

9. Switchgear according to claim 8 characterised in that the device for rotating the support beam (5) comprises a first shaft (43) the end of which can receive a crank-handle and the other end of which rotates a screwthreaded second shaft (46) fitted with a nut (47) having tenons (48A, 48B) and constrained not to rotate so that rotating the second shaft moves the tenons in translation, said tenons engaging in a fork (61, 62) fastened to the support beam (5) and to the control unit (6) and articulated to the second shaft member (60), translation of the tenons rotating the fork.

10. Switchgear according to claim 9 characterised in that it comprises an electric motor (42) for driving the first shaft (43).
